(19) **Europäisches Patentamt**

**European Patent Office**

**Office européen des brevets**

(11) **EP 0 786 655 B1**

(12) **EUROPÄISCHE PATENTSCHRIFT**

(45) Veröffentlichungstag und Bekanntmachung des Hinweises auf die Patenterteilung:
**24.07.2002   Patentblatt 2002/30**

(51) Int Cl.⁷: **G01M 3/18**, G01M 3/32

(21) Anmeldenummer: **97107528.8**

(22) Anmeldetag: **07.05.1997**

(54) **Verfahren zur Dichtheitsprüfung geschlossener Behälter, Prüfkammer, Prüfanordnung und Prüfanlage hierfür**

Procedure for leak testing of closed containers, test chamber, device and installation therefor

Procédé d'essai d'étanchéité d'un récipient fermé, chambre d'essai, dispositif de test et système d'inspection pour celui-ci

(84) Benannte Vertragsstaaten:
**CH LI**

(43) Veröffentlichungstag der Anmeldung:
**30.07.1997   Patentblatt 1997/31**

(73) Patentinhaber: **Lehmann, Martin**
**CH-5610 Wohlen 1 (CH)**

(72) Erfinder: **Lehmann, Martin**
**CH-5610 Wohlen 1 (CH)**

(74) Vertreter: **Troesch Scheidegger Werner AG**
**Patentanwälte**
**Postfach**
**8032 Zürich (CH)**

(56) Entgegenhaltungen:
**WO-A-94/05991      US-A- 3 973 249**
**US-A- 4 404 516**

**Beschreibung**

Die vorliegende Erfindung betrifft ein Verfahren nach dem Oberbegriff von Anspruch 1, eine Prüfkammer nach demjenigen von Anspruch 8, weiter eine Prüfanordnung mit einer derartigen Prüfkammer nach Anspruch 13 und schliesslich eine Prüfanlage nach demjenigen von Anspruch 20.

Dichtheitsprüfverfahren für geschlossene Behälter, bei denen zwischen dem Behälterinneren und dessen Umgebung - in einer Prüfkammer - eine gegen die Umgebung gerichtete Druckdifferenz erzeugt wird - durch Anlegen einer Saugquelle an der Prüfkammer - sind bekannt. Die Selektionierung von undichten Behältern erfolgt dadurch, dass nach Anlegen einer gegebenen Druckdifferenz eine hierzu notwendige Saugquelle von der Prüfkammer abgekoppelt wird und man grundsätzlich den zeitlichen Verlauf der Druckdifferenz zwischen Behälterinnerem und dessen Umgebung beobachtet bzw. erfasst. Dies erfolgt beispielsweise durch Messen der Druckwerte in der Behälterumgebung zu mindestens zwei Zeitpunkten. In Funktion der Grösse eines Lecks erfolgt schneller oder weniger schnell Druckausgleich zwischen Behälterinnenraum und dessen Umgebung. Bezüglich einer solchen Technik kann beispielsweise auf die WO94/05991 derselben Anmelderin wie vorliegende Anmeldung verwiesen werden.

Das geschilderte Vorgehen, insbesondere gemäss der erwähnten WO94/05991, erlaubt, äusserst kleine Behälterlecks zu detektieren. Probleme entstehen dann, wenn zu prüfende Behälter mindestens teilweise mit fliessfähigem Füllgut gefüllt sind, insbesondere mit dünnflüssigem Füllgut. Dann liegt die angelegte Druckdifferenz über der Behälterwand zwischen dem flüssigen Füllgut und der Umgebung, und die Saug-Druck-Wirkung bewirk, bei vorhandenem Leck, dass flüssiges Füllgut durch das Leck in die Umgebung, d.h. an die Aussenwand des Behälters, austritt. Aufgrund der Dichtwirkung des austretenden, flüssigen Füllgutes kann ein Leck im Flüssigkeit-beaufschlagten Behälterwandbereich mittels einer Druckmessung, wenn überhaupt, nur über Beobachtung während relativ langer Zeitabschnitte detektiert werden, was insbesondere bei der Prüfung in Serie anfallender Behälter in einer Produktions-Strasse höchst nachteilig ist.

Aus der US-A-3 973 249 ist es bekannt, geschlossene Behälter mit einem wasserenthaltenden Füllgut auf Dichtheit zu prüfen. Durch Evakuierung der den Behälter umgebenden Kammer wird eine Druckdifferenz zwischen Behälterinnern und Behälterumgebung erzeugt. In dieser Umgebung des Behälters wird die Feuchtigkeit gemessen. Damit werden undichte von dichten Behältern selektioniert.

Ausgehend von einem Verfahren bzw. einer Vorrichtung der in der US-3 973 249 angegebenen Art, setzt sich die vorliegende Erfindung zur Aufgabe, ein Verfahren bzw. eine Vorrichtung vorzuschlagen, welche schneller auf vorhandene Leckagen reagiert.

Dies wird, ausgehend vom eingangs genannten Verfahren, bei dessen Ausführung nach dem kennzeichnenden Teil von Anspruch 1 erreicht bzw. ausgehend von einer Prüfkammer eingangs genannter Art, bei deren Realisation nach dem Kennzeichen von Anspruch 8.

Durch austretendes, flüssiges Füllgut wird unmittelbar im Bereich der Behälteraussenwand eine Änderung der elektrischen Impedanz zwischen mindestens einem Paar in diesem Bereich angeordneter Impedanzmesselektroden bewirkt, und eine Impedanzmessung erlaubt, die füllgutbewirkte Änderung dieser Impedanz zu detektieren.

Während es in gewissen Fällen durchaus angezeigt ist, das Austreten von Füllgut mittels Messung der elektrischen Wechselspannungs-Impedanz vorzunehmen, wird insbesondere für das Prüfen von Behältern mit elektrisch isolierender Wandung, wie mit Kunststoffwandung, und bei Füllgütern, welche elektrisch leitend sind, vorgeschlagen, als Impedanzmessung eine DC-Widerstandsmessung, vorzugsweise eine Niederspannung-DC-Widerstandsmessung, vorzunehmen, beispielsweise unter Einsatz von DC-Spannungen unterhalb von 50 V.

Es wird weiter vorgeschlagen, mehrere der Impedanz-Messstrecken parallel zu schalten.

Dieses auf Impedanzmessung beruhende Dichtheitsprüfverfahren lässt sich nun in höchst vorteilhafter Weise mit der vorerwähnten Druckmessprüfung erfindungsgemäss kombinieren. Wenn nämlich Behälter zu prüfen sind, die - wie meist der Fall - nur teilweise mit fliessfähigem Füllgut gefüllt sind, so dass grundsätzlich nebst dem flüssigen Füllgut Lufteinschlüsse im Behälter vorhanden sind, so ist nie sicher, wo sich im Behälter Luft und wo sich Flüssigkeit befindet. Dadurch, dass man nun zusätzlich zur Impedanzmessung für die Dicht-/Undichtselektionierung den zeitlichen Verlauf einer Druckdifferenz, insbesondere durch Verfolgung des Druckes in einer gekapselten Behälterumgebung, registriert, wird, unabhängig davon, ob Lufteinschlüsse vorhanden sind und wo diese im Behälter momentan lokalisiert sind, eine kombinierte Aussage über den Leckzustand eines Behälters erwirkt: An den momentan mit Füllgut belegten Behälterwandpartien ist die elektrische Impedanzmessung leckagerepräsentativ, während bezüglich der momentan an Lufteinschlüssen liegenden Wandungspartien die Druckdifferenzerfassung leckagerepresäntativ ist. Dabei wird auch hier die aus der WO94/05991 bekannte, höchst präzise Technik eingesetzt, um aus der sich einstellenden Druckdifferenz die Dicht/Undicht-Selektion vorzunehmen, indem nämlich nach Erstellen eines vorgebbaren Unterdruckes zwischen Behälterinnenraum und gekapselter Umgebung und nach druckmässiger Freigabe des Systems von einer Saugquelle an mindestens zwei Zeitpunkten der Druck in der gekapselten Umgebung erfasst wird und die Druckdifferenz als Dichtheitsindikation ausgewertet wird. Um dabei ein höchst empfindliches Messverfahren zu schaffen, wird im ersten Zeitpunkt mit der Abspeicherung des erfassten Druckwertes, als Referenzsignal, auch ein Null-Abweichesignal ermittelt und im zweiten Zeitpunkt die Druckdifferenz bezüglich Null-korrigiertem Wert am ersten Zeitpunkt erfasst. Dies ermöglicht, die erwähnte Differenz bzw. das dieser Differenz entsprechende Auswertesignal zum Erhalt einer hohen Auflösung zu verstärken.

Dabei ist höchst vorteilhaft, dass die Auswertung eines eine entstehende Impedanzdifferenz anzeigenden Signals nach dem gleichen Vorgehen erfolgen kann, wie die Auswertung einer entstehenden Druckdifferenz.

Eine Prüfanordnung mit mindestens einer erfindungsgemässen Prüfkammer ist in Anspruch 13 definiert. Dabei ergibt sich eine höchst vorteilhafte Auslegung dieser Anordnung dadurch, dass bei der weitaus bevorzugten Variante, sowohl eine Impedanzmessung wie auch eine Druckmessung vorzusehen, ein und die selbe Auswerteeinheit eingesetzt wird. Wird beispielsweise für die Impedanzmessung an die Strecke zwischen den vorzugsweise mehreren, parallel geschalteten Elektrodenstrecken, über einen Messwiderstand, eine DC-Spannung angelegt und die Spannung über dem Messwiderstand als Messignal ausgewertet, so wird der Auswerteeinheit eine Spannung, nämlich die vom festen Messwiderstand und dem mit dem Messstreckenwiderstand variierenden Strom abhängige Spannung, zugeführt. Die Auswerteeinheit für sich betrachtet ist dann eine Spannungsmess-Einrichtung. Durch Umschalten auf einen an der Prüfkammer vorgesehen Druckmess-Sensor kann dieselbe Auswerteeinheit zur Messung der druckabhängigen Sensor-Ausgangsspannung eingesetzt werden.

Eine Prüfanlage erfindungsgemässer Art ist in Anspruch 20 spezifiziert. In einer bevorzugten Ausführungsform ist für mehrere, mit mindestens einer Prüfkammer versehene Prüfanordnungen, zentral, eine Auswerteeinheit für die Druckmessung, eine Auswerteeinheit für die Impedanzmessung vorgesehen, jeweils zwischen den Prüfanordnungen umschaltbar, oder gar eine einzige Auswerteeinheit, sowohl umschaltbar zwischen den einzelnen Prüfanordnungen wie auch, jeweils an den einzelnen Prüfanordnungen, umschaltbar für Druckmessung und Impedanzmessung.

Das erfindungsgemässe Verfahren, die Prüfkammer, die Prüfanordnung wie auch Prüfanlage werden bevorzugterweise für die Prüfung von Behältern mit elektrisch isolierender Wandung, vorzugsweise Glasoder Kunststoffwandung, eingesetzt, insbesondere für Behälter aus dem Medizinalbereich, wie Kunststoff-Ampullen. Dabei wird vorzugsweise die Dichtheitsprüfung an mehreren, einen Behältersatz bildenden Behältern vorgenommen, wobei Lecken eines dieser Behälter bzw. einer dieser Ampullen unselektiv Ausschuss des ganzen Satzes nach sich zieht.

Die Erfindung wird anschliessend beispielsweise anhand von Figuren erläutert. Es zeigen:

Fig. 1      schematisch eine erfindungsgemässe, prinzipielle Anordnung zur Erläuterung des erfindungsgemässen Verfahrens unter seinem allgemeinen Aspekt;

Fig. 2      schematisch die Ausbildung einer erfindungsgemässen Prüfkammer bzw. Prüfanordnung zur Ausführung des erfindungsgemässen Verfahrens in weitaus bevorzugter Ausführungsform;

Fig. 3      eine bevorzugte Auswertungskonfiguration der erfindungsgemässen Anordnung bzw. am erfindungsgemässen Verfahren gemäss Fig. 2;

Fig. 4      in Form eines Signalfluss-/Funktionsblockdiagrammes eine bevorzugte Ausführungsform einer Auswerteeinheit gemäss Fig. 3;

Fig. 5      vereinfacht, perspektivisch, eine Ausführungsform der erfindungsgemässen Prüfkammer für die Prüfung von Ampullensätzen, wobei nur die eine Hälfte der erfindungsgemässen Prüfkammer dargestellt ist und

Fig. 6      schematisch ein Signalfluss-/Funktionsblockdiagramm einer erfindungsgemässen Prüfanlage in bevorzugter Ausführungsform.

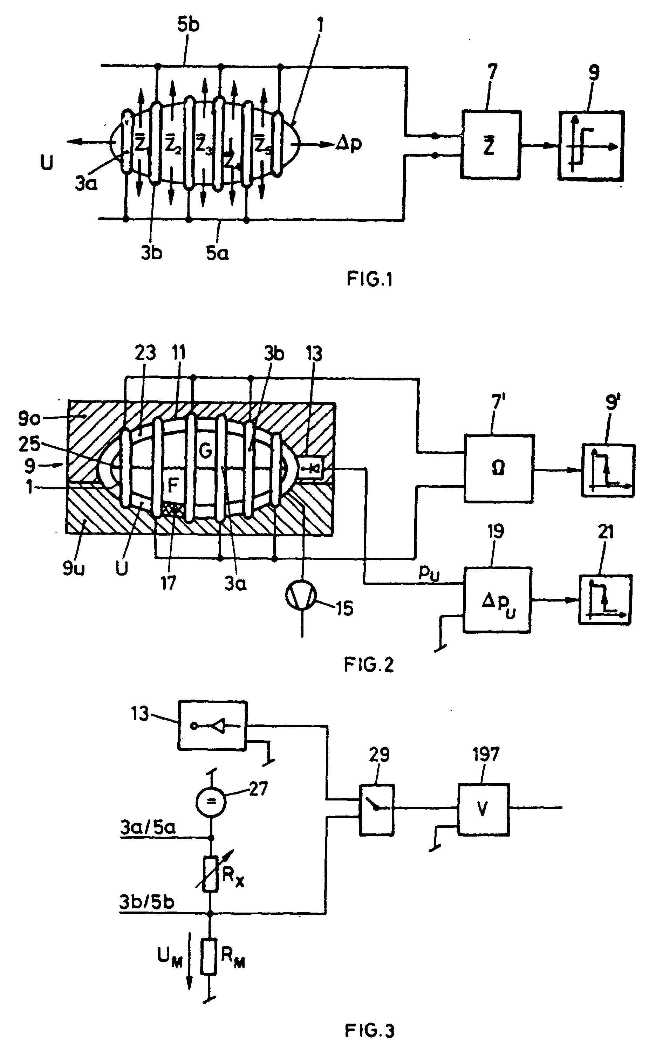

Gemäss Fig. 1 wird zwischen dem Innern I und der Umgebung U eines zu prüfenden Behälters 1 eine gegen die Umgebung U gerichtete Druckdifferenz $\Delta p$ erstellt. Im Bereich der Behälteraussenwand ist mindestens eine Impedanzmessstrecke vorgesehen, gemäss Fig. 1 mehrere, wie mit den komplexen Impedanzen $\overline{Z}_x$ angedeutet. Die Impedanzmessstrecken sind gebildet jeweils zwischen einem Paar Messelektroden 3a und 3b, wobei diese abwechselnd, wie schematisch mit dem Leiter 5a bzw. 5b dargestellt, elektrisch verbunden sind. Damit erscheinen zwischen den Leitern 5a und 5b die Impedanzmessstrecken $\overline{Z}_x$ parallel geschaltet. Die Abgriffleiter 5a und 5b sind einer Impedanzmesseinheit 7 zugeführt, deren Ausgang auf eine Schwellwert-sensitive Einheit 9 wirkt. Tritt aufgrund eines Lecks Füllflüssigkeit aus dem Behälter 1 in die Umgebung U, so ändert sich dadurch mindestens eine der Streckenimpedanzen $\overline{Z}_x$. Die Impedanz bzw. deren Änderung wird durch die Impedanzmesseinheit 7 erfasst. Ändert sich die Impedanz mehr als durch Festlegung mindestens eines Schwellwertes an der Einheit 9 vorgegeben, so wird der eben geprüfte Behälter 1 als leckend erkannt und ausgeschieden.

Obwohl an den Impedanzmessstrecken, je nach Einsatzfall, durchaus komplexe Wechselspannungs-Impedanzen mittels der Einheit 7 erfasst und ausgewertet werden können, wird in weitaus bevorzugter Art und Weise und insbesondere für die Prüfung von Behältern mit elektrisch isolierender Wandung und mit elektrisch leitendem Füllgut die Impedanzmessung als DC-Widerstandsmessung realisiert, womit die Impedanzmesseinheit 7 eigentlich zum Ohm-Meter wird.

Das in Fig. 1 prinzipiell erläuterte Verfahren, auf Impedanzmessung beruhend, lässt sich, wie anschliessend anhand von Fig. 2 erläutert werden soll, höchst optimal, und für die vorliegende Erfindung auch von hoher Bedeutung, mit einem, für sich betrachtet, vorbekannten, auf Druckmessung beruhenden Dichteprüfungsverfahren kombinieren.

Gemäss Fig. 2 umfasst eine erfindungsgemässe Prüfkammer 9 zum Einführen des oder der zu prüfenden Behälter 1 mindestens zwei Teile, bevorzugterweise eine obere und eine untere Hälfte, wie mit $9_o$ und $9_u$ schematisch dargestellt. Die Prüfkammer 9 definiert mit dem aufgenommenen Behälter 1 eine gekapselte Behälterumgebung U. An der Wandung des Prüfkammer-Innenraumes 11 ist ein Muster elektrisch leitender Flächen vorgesehen, welche die Elektroden 3b bzw. 3a gemäss Fig. 1 bilden. Selbstverständlich sind die Elektroden 3 durch isolierendes Wandungsmaterial voneinander getrennt. Damit wird bevorzugterweise eine regelmässige Verteilung von Impedanz-Messstrecken entlang des gesamten, unmittelbar entlang des Behälters 1 liegenden Prüfkammer-Innenraumes vorgesehen.

Im weiteren ist mindestens ein in Fig. 2 schematisch dargestellter Drucksensor 13, mit dem Innenraum der Prüfkammer in Wirkverbund stehend, vorgesehen. Er misst den in diesem Innenraum, entsprechend der Umgebung U, vorherrschenden Druck $P_U$. Nach Einlegen des zu prüfenden Behälters 1, vorzugsweise mit isolierender Wandung, wird die Prüfkammer dichtend verschlossen, und es wird z.B. mittels einer Pumpe 15 die in Fig. 1 eingetragene Druckdifferenz $\Delta p$ erstellt. Dabei schmiegt sich üblicherweise die Behälterwandung eng an die Elektrodenbereiche 3 an der Innenraumwandung der Prüfkammer 9 an. Tritt nun flüssiges Füllgut F in einem Wandungsbereich des Behälters 1 aus, wie schematisch bei 17 dargestellt, so ändert sich die Impedanz zwischen den zugeordneten Elektroden 3, was durch die vorzugsweise als Ohm-Meter ausgebildete Impedanz-Messeinheit 7' erfasst wird. An der Schwellwerteinheit 9' wird detektiert, ob der gemessene Widerstand unter einen vorgegebenen Schwellwert fällt oder diesen übersteigt. Dann wird der eben geprüfte Behälter als undicht selektiert. Bereiche G des Behälters, welche durch Lufteinschlüsse gefüllt sind, ergeben, falls dort ein Leck vorhanden ist, einen Druckanstieg in der Umgebung U, aufgrund des durch das Leck erfolgenden Druckausgleiches zwischen dem Bereich G und der Umgebung U. Diese Druckänderung wird durch eine mit dem Sensor 13 wirkverbundene Druckmesseinheit 19 erfasst, deren Ausgangssignal auf eine weitere Schwellwert-sensitive Einheit 21 geführt wird. Bevorzugterweise wird der Umgebungsdruck zu einem ersten Zeitpunkt $t_1$ und, entsprechend einem vorgegebenen Zeitabstand, zu einem späteren Zeitpunkt $t_2$ erfasst und die diesbezügliche Druckdifferenz $\Delta p_U$ erfasst. Unterschreitet diese Differenz einen an der Schwellwert-Einheit 21 vorgegebenen Schwellwert, so wird auch dann der geprüfte Behälter 1 als undicht selektioniert. Die Wand des Prüfkammer-Innenraumes ist dabei vorzugsweise so ausgebildet, dass auch dann, wenn sich aufgrund der Druckdifferenz die Wandung des Behälters an diese Wand schmiegt, sich ein durchgehender Umgebungsraum 23 um den Behälter 1 erstreckt. Dies wird realisiert grundsätzlich durch wie bei 25 einzeln dargestellte Abstützungen, welche weitaus bevorzugterweise durch Aufrauen der Innenwand 11 realisiert werden. Damit wird erreicht, dass völlig unabhängig, wo die Bereiche G bzw. F im Behälter lokalisiert sind, immer Dichtheit am ganzen Behälter erfasst wird. Bezüglich der Technologie, um trotz Anschmiegens der Behälterwandung an die Kammerinnenwand einen durchgehenden Umgebungsraum 23 sicherzustellen, wird auf die EP-A-0 379 986 desselben Anmelders verwiesen.

Während bei der Ausführungsform gemäss Fig. 2 je eine Auswerteeinheit 7' für die Impedanzmessung und für die Druckdifferenz-Erfassung, 19, vorgesehen sind, wird weiter gemäss Fig. 3 bevorzugterweise eine einzige Auswerteeinheit 197 vorgesehen. Grundsätzlich wird dies dadurch möglich, dass für die Impedanzmessung und die Messung des Ausgangssignals des Drucksensors 13 gleiche Messignale zur Verfügung gestellt werden. Gemäss Fig. 3 kann dies beispielsweise realisiert werden, indem die Messstrecken 3a/5a // 3b/5b, entsprechend dem zu messenden Widerstand, in Fig. 3 mit $R_x$ dargestellt, einerseits einer DC-Spannungsquelle 27, vorzugsweise im Niederspannungsbereich, also beispielsweise von 15 V, zugeschaltet werden, anderseits einem Messwiderstand $R_M$. Die Auswerteeinheit 197, in diesem Fall als Volt-Meter ausgebildet, wird eingangsseitig mittels eines manuell oder automatisch betätigten Umschalters 29 abwechselnd auf den Ausgang des Sensors 13 und auf den Messwiderstand $R_M$ geschaltet. Sie misst im einen Fall die Ausgangsspannung des Sensors 13 und im andern die von $R_x$ abhängige Spannung am Messwiderstand $R_M$, $U_M$.

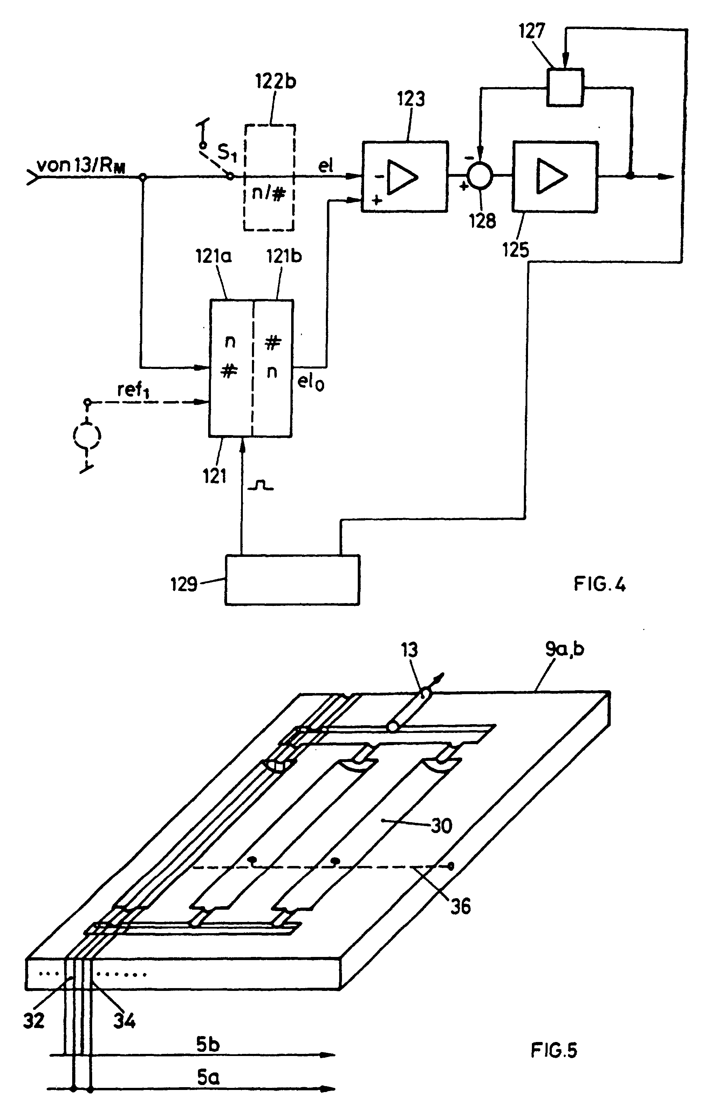

Bezüglich eingesetzter Druckmesstechnik wird vollumfänglich auf die vorerwähnte WO94/05991 verwiesen. Die dort erläuterte Auswerteeinheit, wie vorliegendenfalls in Fig. 4 dargestellt, wird aber, dem Vorgehen von Fig. 3 folgend, auch für eine höchst präzise Impedanz- bzw. Widerstandsmessung eingesetzt. Das Ausgangssignal des Sensors 13 bzw. vom Messwiderstand $R_M$ oder generell von der Widerstandsmesstrecke wird einer Wandlerstufe 121 zugeführt, welche eingangsseitig einen Analog/Digital-Wandler umfasst, 121a, dem unmittelbar nachgeschaltet ein Digital/Analog-Wandler 121b folgt. Der Ausgang des Digital/Analog-Wandlers 121b wird einer auf bekannte Art und Weise aufgebauten Differenzverstärkereinheit 123 zugeführt, ebenso wie das Ausgangssignal von Druck- und Widerstandsmesseinrichtungen 13 bzw. $R_M$. Der Ausgang der Differenzverstärkereinheit 123 ist einer weiteren Verstärkerstufe 125 aufgeschaltet, deren Ausgang über ein Speicherelement 127 dem Eingangssignal zum Verstärker 125 überlagert ist, bei 128. Die Wandlereinheit 121 wie die Speichereinheit 127 werden durch eine Zeittaktsteuerung 129 gesteuert. Mit dieser Anordnung kann sowohl eine Druckdifferenz- wie auch eine Impedanzdifferenz-Messung bzw. Widerstandsdifferenz-Messung vorgenommen werden. Für die Widerstandsmessung wird zu einem ersten Zeitpunkt die Messspannung über die Wandlereinheit 121 und gleichzeitig, gegebenenfalls über eine weitere Wandlereinheit 122, beiden Eingängen der Verstärkereinheit 123 zugeschaltet: Ideal erscheint ausgangsseitig des Verstärkers 123 ein Nullsignal. Erscheint ein von Null abweichendes Signal, so wird dieser Signalwert an der Speichereinheit 127 als Nullkompensationssignal abgespeichert. Wird die Widerstandsmessung in einem späteren Zeitpunkt, zur Bildung eines Widerstandsdifferenzsignals, nochmals erfasst, so wirkt der vormals an der Speichereinheit 127 abgelegte Wert als Nullkompensationssignal und der Wert, der an der Einheit 121 gespeichert ist, als Referenzsignal. Damit kann an der Verstärkereinheit 125 eine die Auflösung drastisch erhöhende Verstärkung eingestellt werden. Dasselbe Nullableichprinzip wird bei der Druckdifferenzmessung zu zwei Zeitpunkten eingesetzt, wie diesbezüglich in der WO94/05991 ausführlich beschrieben. Für die Abspeicherung sowohl eines Widerstandsdifferenz-Nullkompensationssignals wie auch eines Druckdifferenz-Nullkompensationssignals ist die Speichereinheit 127 entsprechend ausgebildet, ebenso, für die Abspeicherung der zugeordneten Referenzwerte, die Einheit 121 doppelt ausgeführt. Je nach Messzyklus, Druck- oder Widerstandsmessung wird der zugeordnete Kompensationssignalwert auf die Differenzeinheit 128 aufgeschaltet bzw. der zugeordnete Referenzsignalwert an der zugeordneten Einheit 121 abgespeichert bzw. aufgeschaltet.

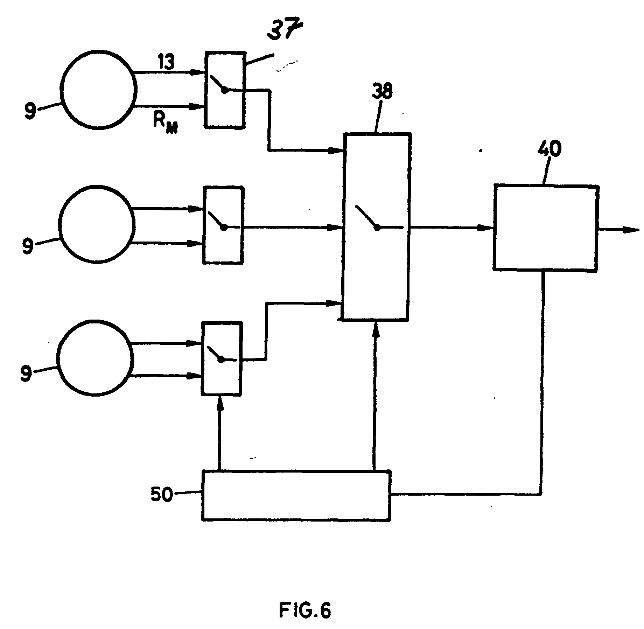

In Fig. 5 ist perspektivisch und vereinfacht die eine Hälfte 9a oder 9b der Prüfkammer dargestellt, speziell ausgelegt für das Prüfen von Ampullensätzen, wie insbesondere in der Medizinaltechnik eingesetzt. Die Ampullensätze werden in die hierfür vorgesehenen, aufgerauhten Einformung 30 eingelegt und dann die Kammer 9 durch Auflegen einer zweiten Kammerhälfte dichtend verschlossen. Wie dargestellt, ist die Kammer beispielsweise aufgebaut aus voneinander durch Isolationsmaterial 32 dichtend getrennten Leiterlamellen 34, worin die Einformungen 30 eingearbeitet sind. Dadurch wird an der Innenwand der Einformungen 30 lückenlos ein Muster von Impedanzmesselektroden gebildet. Sie sind abwechselnd, wie mit den Verbindungsleitern 5a bzw. 5b dargestellt, verbunden.

In Fig. 6 ist anhand eines Signalfluss-Funktionsblockdiagrammes der bevorzugte Aufbau einer erfindungsgemässen Prüfanlage dargestellt. Sie umfasst mehrere Prüfkammern 9, deren Drucksensor- und Impedanzstrecken-Ausgänge, in Fig. 6 mit 13 und $R_M$ bezeichnet, je auf Umschalteinheiten 37 geführt sind. Sequentiell werden diese Eingänge einem Ausgang der Einheiten 37 aufgeschaltet, welche einer eigentlichen Multiplexer-Einheit 38 zugeschaltet sind. An der Multiplexer-Einheit 38 werden selektiv die von den Einheiten 37 zugeführten Eingänge auf eine Auswerteeinheit 40 geschaltet, aufgebaut, wie beispielsweise und vorzugsweise in Fig. 4 dargestellt. Eine Zeitsteuereinheit 50 steuert die kammerspezifischen Umschaltzyklen - Drucksensor/Impedanzmessung- an sowie am Multiplexer 28 die Aufschaltung der einzelnen Prüfkammern 9 auf die als Impedanz- und Druckauswerteeinheit ausgebildete Einheit 40. Damit wird es möglich, mit optimal wenig elektronischen Einheiten die Dichtheit von Behältern an mehreren Prüfkammern 9 zu erfassen, und zwar aufgrund von Impedanz- und Druckmessung, d.h. unabhängig davon, ob und wenn ja, wo flüssigkeitsgefüllte bzw. gasgefüllte Volumina in den jeweiligen Behältern 1 vorliegen.

Im weiteren wird bevorzugterweise mindestens eine Reinigungsgasleitung 36 (Fig. 5) in der Prüfkammer 9 vorgesehen, mit welcher nach Prüfung eines leckenden Behälters die Prüfkammer ausgeblasen und ausgetrocknet werden kann.

**Patentansprüche**

1.  Verfahren zur Dichtheitsprüfung geschlossener Behälter, mindestens teilweise mit fliessfähigem Füllgut gefüllt, bei dem zwischen Behälterinnerem (I) und Behälterumgebung (U) eine gegen letztere gerichtete Druckdifferenz (Δp) erzeugt wird, in der Umgebung des Behälters die Feuchtigkeit gemessen wird und damit undichte von dichten Behältern selektioniert werden, **dadurch gekennzeichnet, dass** man an entlang der Behälteraussenwand verteilten Messtrecken, je mit einem Paar in diesem Bereich angeordneter Impedanzmess-Elektroden, mindestens eine elektrische Impedanzmessung ($\overline{Z}_x$, $R_x$) der unmittelbaren Behälterumgebung (U) und/oder entlang der Behälter-Aussenwand vornimmt.

2.  Verfahren nach Anspruch 1, **dadurch gekennzeichnet, dass** man als Impedanzmessung eine DC-Widerstandsmessung, vorzugsweise eine Niederspannungs-DC-Widerstandsmessung ($R_x$), vornimmt.

3.  Verfahren nach einem der Ansprüche 1 oder 2, **dadurch gekennzeichnet, dass** man mehrere der Impedanz-Messtrecken ($Z_1$, $Z_2$ ...) parallel geschaltet vorsieht.

4.  Verfahren nach einem der Ansprüche 1 bis 3, **dadurch gekennzeichnet, dass** man die Druckdiffe-

renz ($\Delta$p) durch Anlegen eines vorgebbaren Unterdruckes an eine gekapselte Behälterumgebung erstellt, dann die gekapselte Behälterumgebung mit dem Behälter (1) bezüglich Druckentwicklung sich selber überlässt und zusätzlich zur Impedanzmessung ($Z_x$) aus dem zeitlichen Verlauf der Druckdifferenz ($\Delta$pu) undichte von dichten Behältern selektioniert.

5. Verfahren nach Anspruch 4, **dadurch gekennzeichnet, dass** man nach Erstellen des vorgebbaren Unterdruckes und druckmässige Freigabe, zusätzlich den Umgebungsdruck als Leckindikator einsetzt, dabei vorzugsweise, indem man den Umgebungsdruck (pu) an mindestens zwei Zeitpunkten misst und die daraus ermittelte Druckdifferenz ($\Delta$pu) als Dichtheits-Indikator auswertet, vorzugsweise, indem man im ersten Zeitpunkt und beim zugeordneten Druck eine Nullreferenz (127) bestimmt und das dem Druckwert im zweiten Zeitpunkt entsprechende Auswertesignal bezüglich Signal im ersten Zeitpunkt und null-korrigiert für die Selektionierung einsetzt.

6. Verfahren nach einem der Ansprüche 1 - 5 **dadurch gekennzeichnet, dass** man die Impedanz an mindestens zwei Zeitpunkten misst, und die daraus ermittelte Impedanzdifferenez als Dichtheits-Indikator auswertet, vorzugsweise indem man im ersten Zeitpunkt und beim zugeordneten Impedanzwert eine Nullreferenz bestimmt, und das dem Impedanzwert im zweiten Zeitpunkt entsprechende Auswertesignal bezüglich Signal im ersten Zeitpunkt und null korrigiert für die Selektionierung einsetzt.

7. Verfahren nach einem der Ansprüche 1 bis 6, **dadurch gekennzeichnet, dass** die Dichtheit von Behältern mit elektrisch isolierender Wandung, vorzugsweise Glas- oder Kunststoffwandung, insbesondere von Behältern aus dem Medizinalbereich, geprüft wird.

8. Prüfkammer, deren Innenraum (U) zur Aufnahme eines zumindest teilweise mit fliessfähigem Füllgut gefüllten Behälters (1) ausgeführt ist und der vakuumdicht verschliessbar ist, mit Feuchtigkeitssensoren, die mit dem Prüfkammerinnenraum (U) wirkverbunden sind, **dadurch gekennzeichnet, dass** entlang der Innenraumwandung (11) der Prüfkammer (9) verteilte Impedanzmessstrecken vorhanden sind, je mit einem Paar in diesem Bereich so angeordneter, beabstandeter Impedanzmesselektroden (3), und dass diese Messstrecken bei Aufnahme des Behälters entlang der Behälteraussenwand verteilt sind, so dass damit eine Impedanzmessung der unmittelbaren Behälterumgebung und/oder entlang der Behälteraussenwand ermöglicht ist.

9. Prüfkammer nach Anspruch 8, **dadurch gekennzeichnet, dass** die Elektrodenpaare der Strecken, parallel (5a, 5b) geschaltet sind.

10. Prüfkammer nach einem der Ansprüche 8 oder 9, **dadurch gekennzeichnet, dass** die Kammerinnenwand durch ein Muster elektrisch leitender Elektrodenabschnitte (34) und diese voneinander trennender, isolierender Abschnitte (32) gebildet ist.

11. Prüfkammer nach einem der Ansprüche 8 bis 10, **dadurch gekennzeichnet, dass** an der Prüfkammer mindestens ein Drucksensor (15) vorgesehen ist.

12. Prüfkammer nach einem der Ansprüche 8 bis 11, **dadurch gekennzeichnet, dass** in die Kammer mindestens ein Reinigungsgas-Anschluss (36) einmündet.

13. Prüfanordnung mit mindestens einer Prüfkammer nach einem der Ansprüche 8 bis 12, **dadurch gekennzeichnet, dass** die Elektrodenpaare (3a, 3b) mit mindestens einer Impedanz-Messeinheit (7) wirkverbunden sind.

14. Prüfanordnung nach Anspruch 13, **dadurch gekennzeichnet, dass** die Impedanz-Messeinheit eine DC-Widerstandsmesseinheit (7') ist, vorzugsweise eine Niederspannung-Widerstand-Messeinheit.

15. Prüfanordnung nach einem der Ansprüche 13 oder 14, **dadurch gekennzeichnet, dass** die Elektrodenpaare parallel (5a, 5b) mit dem Eingang der Impedanz-Messeinheit (7, 7') wirkverbunden sind.

16. Prüfanordnung nach einem der Ansprüche 13 bis 15, **dadurch gekennzeichnet, dass** die Impedanz-Messeinheit (7, 7') ausgangsseitig eine Schwellwert-sensitive Einheit (9, 9') umfasst.

17. Prüfanordnung nach einem der Ansprüche 13 bis 16, **dadurch gekennzeichnet, dass** an der Prüfkammer ein Drucksensor (13) vorgesehen ist, und dass der Ausgang des Drucksensors mit einer Auswerteeinheit (19) wirkverbunden ist, welche vorzugsweise zu einem ersten Zeitpunkt das Sensor-Ausgangssignal registriert, ebenso zu einem zweiten, nachfolgenden Zeitpunkt und die registrierten Drucksensor-Ausgangssignale auf eine Differenzeinheit (123, 125) führt, deren Ausgang auf eine Schwellwert-sensitive Einheit wirkt.

18. Prüfanordnung nach Anspruch 17, **dadurch gekennzeichnet, dass** den beiden Eingängen der Differenzeinheit (123) das im ersten Zeitpunkt registrierte Ausgangssignal des Sensors zugeführt wird und ein Nulldifferenzsignal als Ausgangssignal der Differenzeinheit gebildet wird und abgespeichert wird.

19. Prüfanordnung nach einem der Ansprüche 13 bis 18, **dadurch gekennzeichnet, dass** an der mindestens einen Prüfkammer ein Drucksensor (13) vorgesehen ist, dass sowohl der Drucksensor (13) wie auch das Elektrodenpaar (3a, 3b) mit derselben Auswerteeinheit (197) wirkverbunden sind, welche, vorzugsweise umschaltbar (29), ein Signal in Funktion der Impedanz an einem jeweiligen Elektrodenpaar und des Sensorausgangssignals erzeugt.

20. Prüfanlage mit einer Mehrzahl Prüfanordnungen nach einem der Ansprüche 13 bis 19.

21. Prüfanlage nach Anspruch 20, **dadurch gekennzeichnet, dass** für die Prüfanordnungen eine zentrale Impedanz-Messeinheit (40) vorgesehen ist, welche umschaltbar (38) mit den jeweiligen Prüfanordnungen (9) verbindbar ist.

22. Prüfanlage nach einem der Ansprüche 20 oder 21, **dadurch gekennzeichnet, dass** an den Prüfkammem je ein Drucksensor (13) vorgesehen ist, dass eine zentrale Auswerteeinheit (40) umschaltbar mit den Drucksensoren (13) der Prüfkammern (9) an den Prüfanordnungen und deren Elektrodenpaaren (3a, 3b) wirkverbindbar ist.

23. Verfahren zur Dichtheitsprüfung geschlossener Behälter, die mindestens teilweise mit fliessfähigem Füllgut gefüllt sind, **dadurch gekennzeichnet, dass** eine Vorrichtung nach einem der Ansprüche 8 - 22 verwendet wird, und dass die Dichtheit von Behältern mit elektrisch isolierender Wandung, vorzugsweise Glas- oder Kunststoffwandung, insbesondere von Behältern aus dem Medizinalbereich, geprüft wird.

## Claims

1. A method for tightness testing of closed containers filled at least partially with a flowable filling material, comprising creating between the interior (I) and the environment (U) of the container a pressure difference (Δp) directed against the environment, measuring moisture in the environment of the container and thus making a separation between leaking and unleaking containers, **characterized by** performing at measuring sections distributed along the outer wall of the container, using pairs of impedance measuring electrodes arranged in this area, at least one electrical impedance measurement ($\bar{Z}_x$, $R_x$) of the immediate environment of the container (U) and/or along the outer wall of the container.

2. Method according to claim 1, **characterized in that** a DC resistance measurement, preferably a low-voltage DC resistance measurement ($R_x$) is performed as impedance measurement.

3. Method according to one of claims 1 or 2, **characterized in that** a plurality of impedance-measuring sections ($Z_1$, $Z_2$, ...) connected in parallel, are provided.

4. Method according to one of claims 1 to 3, **characterized in that** the pressure differential (Δp) is created by applying a presettable vacuum to an encapsulated container environment, then the encapsulated container environment is combined with the container (1) as far as pressure development is concerned, and in addition to impedance measurement ($Z_x$) from the time curve of the pressure differential (Δpu) leaking containers are separated from nonleaking ones.

5. Method according to claim 4, **characterized in that** after the presettable vacuum is created and released, the ambient pressure is used additionally as a leak indicator, preferably with the ambient pressure (pu) being measured at at least two points in time and with the resultant pressure differential (Δpu) being evaluated as a tightness indicator, preferably **in that** a zero reference (127) is determined at the first point in time and at the assigned pressure and the evaluation signal corresponding to the pressure value at the second point in time is used in consideration of the signal at the first point in time and zero-corrected for said separation.

6. Method according to any of claims 1 to 5, **characterized in that** the impedance is measured at least at two points of time and the determined impedance differential is used as tightness-indicator, preferably by determining a zero-reference at the first time point and at the corresponding impedance value and **in that** the evaluation signal corresponding to the value of the impedance at the second time point is used in consideration of the signal at the first point in time and zero-corrected for said separation.

7. Method according to any of claims 1 to 6, **characterized by** testing the tightness of containers with electrically insulating walls, preferably glass or plastic walls, especially containers for use in the field of medicine.

8. Test chamber having an interior (U) for receiving a container (1) filled at least partially with a flowable filling material and which is closable in a vacuum-tight manner and comprising moisture sensors operatively connected with said interior (U) of the test chamber, **characterized in that** impedance-measuring sections are provided distributed along the wall (11) of the interior of the test chamber (9), each section having one pair of spaced impedance measuring electrodes (3) and the measuring sections after reception of said container being distributed along the outer wall of the container such that an impedance measuring is possible of the immediate environment of the container and/or along the outer wall of the container.

9. Test chamber according to claim 8, **characterized in that** said electrode pairs of the sections are connected in parallel (5a, 5b).

10. Test chamber according to one of claims 8 or 9, **characterized in that** the chamber inside wall is formed by a pattern of electrically conducting electrode sections (34) and insulating sections (32) separating the latter from one another.

11. Test chamber according to one of claims 8 to 10, **characterized in that** at least one pressure sensor (15) is provided on the test chamber.

12. Test chamber according to one of claims 8 to 11, **characterized in that** at least one cleaning gas connection (36) terminates in the chamber.

13. Test system with at least one test chamber according to one of claims 8 to 12, **characterized in that** said electrode pairs (3a, 3b) are operatively connected with at least one impedance-measuring unit (7).

14. Test system according to claim 13, **characterized in that** the impedance-measuring unit is a DC resistance measuring unit (7'), preferably a low-voltage resistance measuring unit.

15. Test system according to one of claims 13 or 14, **characterized in that** the electrode pairs are connected operatively in parallel (5a, 5b) with the input of impedance-measuring unit (7, 7').

16. Test system according to one of claims 13 to 15, **characterized in that** impedance-measuring unit (7, 7') comprises a threshold value-sensitive unit (9, 9') on the output side.

17. Test system according to one of claims 13 to 16, **characterized in that** a pressure sensor (13) is provided on the test chamber and **in that** the output of the pressure sensor is operatively connected with an evaluation unit (19) that preferably records the sensor output signal at a first point in time and also at a second subsequent point in time, and feeds the recorded pressure sensor output signals to a differential unit (123, 125) whose output acts on a threshold value-sensitive unit.

18. Test system according to claim 17, **characterized in that** the two inputs of differential unit (123) receive the output signal of the sensor recorded at the first point in time and a zero-differential signal is formed and stored as the output signal of the differential unit.

19. Test system according to one of claims 13 to 18, **characterized in that** a pressure sensor (13) is provided on the at least one test chamber and **in that** both pressure sensor (13) and electrode pair (3a, 3b) are operatively connected with the same evaluation unit (197), which, preferably switchably (29), generates a signal as a function of the impedance at the electrode pair and the sensor output signal.

20. Tester installation with a plurality of testing systems according to one of claims 13 to 19.

21. Tester installation according to claim 20, **characterized in that** a central impedance-measuring unit (40) is provided for the testing systems, said unit being switchable (38) to individual testing systems (9).

22. Tester installation according to one of claims 20 or 21, **characterized in that** a pressure sensor (13) is on each pressure chamber and **in that** a central evaluation unit (40) is operatively connectable in a switchable fashion with the pressure sensors (13) of test chambers (9) of the test systems and their electrode pairs (3a, 3b).

23. A method of tightness testing of closed containers filled at least partially with a flowable filling material, **characterized in that** a device according to one of claims 8 to 22 is used and **in that** the tightness of containers with electrically insulating walls, preferably glass or plastic walls, especially containers used in the field of medicine, are tested.

**Revendications**

1. Procédé d'essai d'étanchéité de récipients fermés remplis au moins partiellement avec un matériau de remplissage coulant, dans lequel on crée entre l'intérieur (I) et l'environnement (U) du récipient une différence de pression (Δp) dirigée contre ledit environnement et dans lequel on mesure l'humidité dans l'environnement du récipient pour sélectivement séparer des récipients étanches des récipients non-étanches **caractérisé en ce qu'**on procède dans des sections de mesure distribuées le long de la paroi extérieure du récipient et en utilisant chaque fois une paire d'électrodes de mesure d'impédance disposée dans cette zone, à au moins une mesure électrique de l'impédance ($\bar{Z}_x$, $R_x$) de l'environnement immédiat (U) du récipient et/ou le long de la paroi extérieure du récipient.

2. Procédé selon la revendication 1, **caractérisé en ce que** l'on procède à la mesure de l'impédance par une mesure de résistance CC, de préférence une mesure de résistance CC a basse tension ($R_x$).

3. Procédé selon l'une des revendications 1 ou 2, **caractérisé en ce que** l'on prévoit plusieurs sections de mesure d'impédance ($Z_1$, $Z_2$, ...) connectées en parallèle.

4. Procédé selon l'une des revendications 1 à 3, **caractérisé en ce que** la différence de pression ($\Delta$p) est crée en appliquant un vide prédéterminé à un environnement de récipient encapsulé, suivi d'une combinaison de l'environnement de récipient encapsulé avec le récipient (1) en ce qui concerne le développement de la pression et, en plus de la mesure d'impédance ($Z_x$), à sélectivement séparer des récipients étanches de récipients non-étanches en se basant sur le développement dans le temps de la différence de pression ($\Delta$pu).

5. Procédé selon la revendication 4, **caractérisé en ce que** après la création du vide prédéterminé et sa libération quant à la pression, la pression ambiante est utilisée en plus comme indicateur de fuite, de préférence avec la pression ambiante (pu) mesurée à au moins deux points dans le temps et avec la différence de pression ($\Delta$pu) calculée au moyen de cette mesure et évaluée comme indicateur d'étanchéité, de préférence **en ce qu'**une référence zéro (127) est déterminée au premier point dans le temps et à la pression correspondante et **en ce que** le signal d'évaluation correspondant à la valeur de la pression dans le second point dans le temps est utilisé en considération signal au premier point dans le temps et zéro-corrigé pour ladite séparation sélective.

6. Procédé selon l'une des revendications 1 à 5, **caractérisé en ce que** l'impédance est mesurée dans au moins deux points dans le temps et la différence d'impédance déterminée est utilisée comme indicateur d'étanchéité de préférence en déterminant dans le premier point dans le temps et la valeur d'impédance correspondante une référence zéro, et **en ce que** le signal d'évaluation correspondant à la valeur d'impédance dans le second point dans le temps est utilisé en considération du signal au premier point dans le temps et zéro-corrigé pour ladite séparation sélective.

7. Procédé selon l'une des revendications 1 à 6, **caractérisé en ce que** l'on essaye l'étanchéité de récipients ayant des parois électriquement isolantes, de préférence de parois en verre ou en plastique, notamment de récipients dan la domaine de la médicine.

8. Chambre d'essai avec un espace intérieur (U) destiné à recevoir un récipient (1) rempli au moins partiellement avec un matériau de remplissage coulant et qui peut être fermé de manière étanche, avec des détecteurs d'humidité fonctionellement connectés avec l'intérieur (U) de la chambre d'essai, **caractérisée en ce que** dès sections de mesure d'impédance sont prévues distribuées le long de la paroi intérieure (11) de la chambre d'essai (9), chaque section équipée d'une paire d'électrodes de mesure d'impédance (3) écartées et les sections de mesure étant, lors de la réception du récipient, distribuées le long de la paroi extérieure du récipient, de telle manière à ce qu'il soit possible de procéder à une mesure d'impédance dans l'environnement immédiat du récipient et/ou le long de la paroi extérieure du récipient.

9. Chambre d'essai selon la revendication 8, **caractérisée en ce que** lesdites paires d'électrodes des sections sont connectées en parallèle.

10. Chambre d'essai selon l'une des revendications 8 ou 9, **caractérisée en ce que** la paroi intérieure de la chambre est formée par un dessin de sections d'électrodes (34) conductrices d'électricité et de sections isolantes (32) séparant ces dernières.

11. Chambre d'essai selon l'une des revendications 8 à 10, **caractérisée en ce qu'**au moins un détecteur de pression (15) est prévue à la chambre d'essai.

12. Chambre d'essai selon l'une des revendications 8 à 11, **caractérisée en ce qu'**au moins un raccord (36) pour un gaz de nettoyage est prévue sur la chambre.

13. Dispositif de test avec au moins une chambre d'essai selon l'une des revendications 8 à 12, **caractérisé en ce que** lesdites paires d'électrodes (3a, 3b) sont opérativement connectées avec au moins une unité de mesure d'impédance.

14. Dispositif de test selon la revendication 13, **caractérisé en ce que** l'unité de mesure d'impédance est une unité de mesure de résistance CC (7'), de préférence une unité de mesure de résistance à basse tension.

15. Dispositif de test selon l'une des revendications 13 ou 14, **caractérisé en ce que** les paires d'électrodes sont opérativement connectées en parallèle (5a, 5b) avec l'entrée de l'unité de mesure d'impédance (7, 7').

**16.** Dispositif de test selon l'une des revendications 13 à 15, **caractérisé en ce que** l'unité de mesure d'impédance (7, 7') comprend à la sortie une unité (9, 9') sensible à des valeurs de seuil.

**17.** Dispositif de test selon l'une des revendications 13 à 16, **caractérisé en ce qu'**un détecteur de pression (13) est prévu à la chambre d'essai et **en ce que** la sortie du détecteur de pression est opérativement connectée avec une unité d'évaluation (19), cette dernière enregistrant de préférence dans un premier point dans le temps le signal de sortie du détecteur et également dans un deuxième point dans le temps subséquent, et dirige les signaux de sortie du détecteur de pression dans une unité différentielle (123, 125) dont la sortie agit sur une unité sensible à des valeurs de seuils.

**18.** Dispositif de test selon la revendication 17, **caractérisé en ce que** le signal de sortie du détecteur enregistré dans ledit premier point dans le temps est dirigé sur les deux entrées de l'unité différentielle (123) et **en ce qu'**un signal de zéro-différence est formé comme signal de sortie et est enregistré.

**19.** Dispositif de test selon l'une des revendications 13 à 18, **caractérisé en ce qu'**un détecteur de pression (13) est prévu sur ladite au moins une chambre d'essai et **en ce que** le détecteur de pression (13) ainsi que la pair d'électrodes (3a, 3b) sont opérativement connectés avec la même unité d'évaluation (197), laquelle, de préférence commutable, produit un signal en fonction de l'impédance sur une des paires d'électrodes correspondantes et du signal de sortie du détecteur.

**20.** Installation de test avec une pluralité de dispositifs de test selon l'une des revendications 13 à 19.

**21.** Installation de test selon la revendication 20, **caractérisé en ce qu'**une unité de mesure d'impédance centrale (40) est prévue pour les dispositifs de test qui peut être connectée de manière commutable (38) avec les dispositifs de test individuels.

**22.** Installation de test selon l'une des revendications 20 ou 21, **caractérisée en ce qu'**un détecteur de pression (13) est prévu pour chaque chambre d'essai, et **en ce qu'**une unité d'évaluation centrale (40) commutable est opérativement connectable avec les détecteurs de pression (13) des chambres d'essai (9) des dispositifs de test et leurs paires d'électrodes (3a, 3b).

**23.** Procédé d'essai d'étanchéité de récipients fermés remplis au moins partiellement avec un matériau de remplissage coulant, **caractérisé en ce qu'**un dispositif selon les revendications 8 à 22 est utilisé et **en ce que** l'étanchéité de récipients est essayée présentant une paroi électriquement isolante, de préférence une paroi en verre ou plastique, notamment des récipients du domaine médical.

FIG.1

FIG.2

FIG.3

11

FIG.4

FIG.5

FIG.6